# EUROPEAN PATENT SPECIFICATION

(11) **EP 0 974 452 B1**
(45) Date of publication and mention of the grant of the patent: **01.12.2004**
(21) Application number: 99202397.8
(22) Date of filing: 20.07.1999
(51) Int. Cl.: B32B 27/08, B32B 31/00, A22C 13/00, B65D 65/40, B32B 27/34

(54) **Streched multilayer film casing and process for production thereof**
Gestreckte mehrschichtige Verpackungsfolie und Verfahren zur Herstellung
Pellicule d'emballage étirée à plusieurs couches et procédé pour sa fabrication

(30) Priority: 24.07.1998 JP 22376098
(43) Date of publication of application: 26.01.2000
(73) Proprietor: KUREHA KAGAKU KOGYO KABUSHIKI KAISHA, Chuo-ku, Tokyo 103-8552 (JP)
(72) Inventor: Ueyama, Takahisa, Polymer Processing Techn.Center, Niihari-gun, Ibaraki-ken 311-3436 (JP); Itoh, Tadayoshi, Polymer Processing Techn.Center, Niihari-gun, Ibaraki-ken 311-3436 (JP); Hayashi, Eiichi, Polymer Processing Techn.Center, Niihari-gun, Ibaraki-ken 311-3436 (JP); Tsukamoto, Hajime, Tube Film Production Depart., Niihari-gun, Ibaraki-ken 311-3436 (JP)
(74) Representative: du Pont, Jeroen

(56) References cited:
- EP-A- 0 692 374
- US-A- 4 755 419
- PATENT ABSTRACTS OF JAPAN vol. 1997, no. 01, 31 January 1997 (1997-01-31) & JP 08 230035 A (MITSUBISHI PLASTICS IND LTD), 10 September 1996 (1996-09-10)

## Description

### FIELD OF THE INVENTION AND RELATED ART

The present invention relates to a casing formed of a biaxially stretched multilayer film having at least three layers including at three layers of an intermediate polyamide-based gas-barrier resin layer and a pair of outer layers comprising polyolefin resins and exhibiting specific heat-shrinkage stress and hot-water shrinkability, and also a process for production of such a casing.

Hitherto, it has been widely practiced to fill a biaxially stretched film casing with a (semi-) fluid content material (i.e., a semi-fluid or fluid content material) of, e.g., foods, such as ham, sausage, stick cheese and others, to provide a packaged product through a process of automatic filling and packaging.

Such a casing film (i.e., a film constituting such a casing) may preferably have good mechanical properties, good processability inclusive of extrudability and stretchability, transparency, and good gas-barrier property for ensuring storage stability of the packaged product. Further, the casing film after filling with the content material may preferably exhibit heat-shrinkability during a post-treatment, such as boiling sterilization, for the purpose of providing not only a good appearance free from the occurrence of winkles but also a packaged product, such as food, of good preservability without leaving voids therein.

Further, in order to provide a packaged (semi-)fluid product with excellent easy-openability by automatic packaging, it is also preferred to adopt an automatic packaging mode wherein a heat-shrinkable biaxially stretched multilayer film is processed into a tubular casing provided with a center seam by back-seaming (i.e., a sealing mode of joining a pair of outer surfaces of the multilayer film to each other into a tube shape; also sometimes called "envelope-sealing"), and the content material is filled in and packaged with the casing.

Hitherto, heat-shrinkable resin films conventionally used in the above-mentioned and other packaging modes, in most cases, have been formed as heat-shrinkable multilayer films formed by laminating, in various manners, layers of resins, such as polyolefin resin(s) (hereinafter sometimes abbreviated as "PO") having excellent sealability and extrudability as represented by polyethylene resin ("PE"), polypropylene resin ("PP") and ethylene-vinyl acetate copolymer ("EVA"); polyamide resin(s) ("Ny") having excellent mechanical properties, stretchability and gas-barrier property; vinylidene chloride resin(s) ("PVDC") and saponified ethylene-vinyl acetate copolymer resin(s) ("EVOH") having particularly excellent gas-barrier property; and modified-polyolefin resin(s) ("M-PO") inclusive of ionomer resins. Particularly, multilayer film(s) including an intermediate layer of polyamide resin ("Ny") (hereinafter sometimes called "polyamide-based multilayer film(s)") having excellent mechanical properties, stretchability and gas-barrier property are well-known. Representative examples of laminate form or structure thereof may include: PO/Ny/PO, PE/Ny/PE, EVA/Ny/EVA, M-PO/Ny/EVOH/M-PO, EVA/EVOH/Ny/EVA, PP+PE/M-PO/EVOH/Ny/M-PO/PP+PE (e.g., as disclosed in Japanese Patent Publication (JP-B) 61-53218, JP-B 3-80422, Japanese Laid-Open Patent Application (JP-A) 6-210810, and JP-A 8-230035) wherein respective layers separated by "/" (slash) are enumerated from the outer surface layer to the inner surface layer in each laminate, and "+" represents a mixture of two resins connected therewith.

US-A-4 755 419 relates to a biaxially oriented coextruded film having at least 7 layers arranged symmetrically, intended for packaging applications.

Patent abstracts of Japan, volume 1997, No. 01, 31 January 1997 relates to the production of co-extrusion multilayered stretched film which is hard to tear, excellent in shrink characteristics and suitably usable in the vacuum packaging of raw meat or livestock processed products.

However, various problems have been found in using such a heat-shrinkable polyamide-based multilayer film in the process of automatic filling and packaging of (semi-) fluid content material including a back-seaming step due to its inherent heat-shrinkability. The problems are for example as follows. (a) When a (semi-)fluid content material, such as fish-meat or livestock-meat sausage, is applied to automatic filling and packaging (by using, e.g., "KAP Packaging Machine", mfd. by Kureha Kagaku Kogyo K.K.), the film shrinks at the time of sealing to come off the sealing bar, thus making the packaging difficult or impossible. Further, even, if the packaging is possible, the resultant seal or seam is broken during a heat-treatment thereafter. (b) During the back-seaming of joining the outer surface layer of a film to the inner surface layer of the film, a shrinkage of the heat-shrinkable multilayer film occurs, thereby making it difficult to provide a sufficient seal strength and resulting in a remarkably lower processing yield. Further, a size change is liable to occur after the back-seaming, so that the (lay-flat) width of the seamed casing is liable to fluctuate. As a result, if the casings are filled with a constant amount of content material, the resultant product lengths are liable to fluctuate, thus lowering the merchandise value. Further, the seam is liable to be broken during a heat-treatment after the packaging. (c) The above-mentioned difficulties are noticeable particularly when the back-seaming is performed at a reduced seam width of, e.g., ca. 0.1 - 1.5 mm so as to ensure an easy-openability and/or an beautiful or neat appearance of the packaged product.

### SUMMARY OF THE INVENTION

Accordingly, a principal object of the present invention is to provide a film casing of a back-seamed polyamide-based multilayer film having solved the above-mentioned problems and suitable for automatic packaging. A film casing referred to herein means a tubular film formed by back-seaming.

Another object of the present invention is to provide a process for producing such a film casing.

A further object of the present invention is to provide a packaged product obtained from such a film casing.

As a result of our study for accomplishing the above objects, it has been found that most of the above-mentioned problems accompanying the film casing of a heat-shrinkable polyamide-based multilayer film are caused by an excessive heat-shrinkability of the film but are still caused even after setting the heat-shrinkability to an adequate level by controlling the stretching condition, etc. It has been also found that this is because of an excessively large heat-shrinkable stress (i.e., a stress occurring during the heat-shrinkage) of the multilayer film since it includes a gas-barrier intermediate layer formed of a polyamide resin.

As a result of our further study, it has been found that if a polyamide-based multilayer film is biaxially stretched under appropriate conditions and then subjected to an optimum heat-treatment (i.e., a heat-treatment capable of exerting a uniform relaxation effect at a relatively low temperature), the polyamide-based multilayer film can be provided with an appropriate degree of heat-shrinkability and a suppressed heat-shrinkage stress in combination and can be back-seamed to provide a film casing suitable for automatic filling and packaging. It has been also found that in order to effect such a heat-treatment exerting a uniform relaxation effect at a relatively low temperature after an inflation process as a preferable biaxial stretching process, it is extremely preferred to use steam or warm water having a large heat capacity as the heat-treating medium.

The stretched multilayer film casing according to the present invention is based on the above findings and more specifically comprises a stretched multilayer film casing, comprising: a stretched multilayer film comprising a pair of outer layers comprising polyolefin resins of identical species, and a gas-barrier intermediate layer comprising a polyamide resin; said stretched multilayer film exhibiting a heat-shrinkage stress at 50 °C of at most 2MPa both in longitudinal direction and in transverse direction and a hot water shrinkability at 90 °C of 5 - 20 %; said stretched multilayer film having a pair of opposite side regions joined together by back-seaming with both surfaces to form a tubular casing.

According to the present invention, there is also provided a process for producing a stretched multilayer film casing, comprising the steps of:
co-extruding at least three species of melted thermoplastic resins to form a tubular product comprising at least three layers including a pair of outer layers each comprising a polyolefin resin, and a gas-barrier intermediate layer comprising a polyamide resin,
cooling with water the tubular product to a temperature below a lowest one of the melting points of the polyolefin resins and the polyamide resin,
re-heating the tubular product to a temperature which is at most the lowest one of the melting points of the polyolefin resins and the polyamide resin,
vertically pulling the tubular product while introducing a fluid into the tubular product to stretch the tubular product at a rate of 2.0 - 4 times both in a vertical direction and in a circumferential direction, thereby providing a biaxially stretched tubular film,
folding the tubular film,
again introducing a fluid into the folded tubular film to form a tubular film,
heat-treating the tubular film from its outer surface layer with steam or warm water at 60 - 98 °C,
cooling the heat-treated tubular film to provide a biaxially stretched film exhibiting a heat-shrinkage stress at 50 °C of at most 2MPa both in longitudinal direction and in transverse direction and a hot water shrinkability at 90 °C of 5 - 20 %,
slitting the biaxially stretched tubular film into a rectangular film, and
joining pair of opposite side regions of the rectangular film by back-seaming with both surfaces of the rectangular film to form a tubular film casing.

According to the present invention, there is further provided a packaged product, comprising a film casing as described above, and a content material filling and packaged within the film casing.

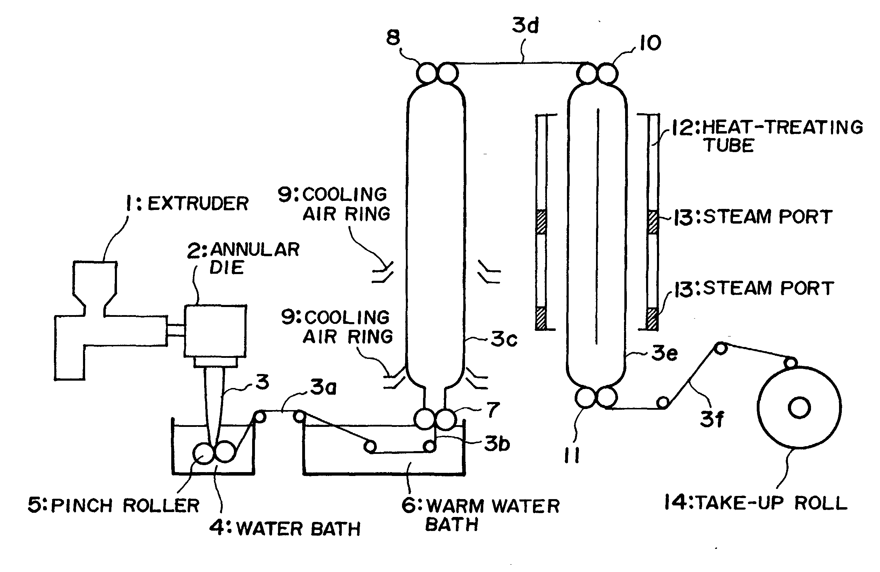

These and other objects, features and advantages of the present invention will become more apparent upon a consideration of the following description of the preferred embodiments of the present invention taken in conjunction with the accompanying drawing.

### BRIEF DESCRIPTION OF THE DRAWING

The sole figure in the drawing is a schematic illumination of an apparatus system suitable for producing a polyamide-based multilayer film used for production of a stretched multilayer film casing according to the invention.

### DETAILED DESCRIPTION OF THE INVENTION

The stretched multilayer film casing according to the present invention is formed of a polyamide-based multilayer film comprising at least three layers including a pair of outer layers comprising polyolefin resins of identical species, and a gas-barrier intermediate layer comprising a polyamide resin.

Examples of the polyolefin resins constituting the pair of outer layers may include: polyolefins polymerized in the presence of a single-site catalyst or metallocene catalyst (hereinafter sometimes abbreviated as "SSC"), inclusive of ethylene-α-olefin copolymers, such as linear low-density polyethylene (abbreviated as "SSC-LLDPE") and linear very low-density polyethylene ("SSC-VLDPE"); conventional ethylene-α-olefin copolymers (inclusive of those generally called "LLDPE" and "VLDPE"; which are copolymers of ethylene with at least one comonomer selected from C₃- to C₁₀-olefins, particularly C₄- to C₈-olefins, such as butene-1, pentene-1, 4-methylpentene-1, hexene-1 and octene-1); polypropylene ("PP"); and propylene copolymers ("PP-Et"), as represented by propylene-ethylene copolymer and propylene-ethylene-butene copolymer. The polyolefin resins may preferably have a melting point in the range of 90 - 170 °C, more preferably 95 - 150 °C, further preferably 100 - 140 °C. In case of a higher melting point, the stretching of the multilayer film becomes difficult. In case of a lower melting point, the resultant packaged product is liable to cause puncture at the sealed part. Within an extent of not remarkably lowering the transparency, it is possible to use a blend containing at least one species of such a polyolefin resin in a proportion of preferably at most 30 wt. %.

Among the above-mentioned polyolefins, a preferred class may include: SSC-LLDPE, SSC-VLDPE, LLDPE and VLDPE having a density of at least 0.900 g/cm³, particularly at least 0.905 g/cm³, and PP-Et containing at least 1 wt. %, more preferably at least 3 wt. %, further preferably at least 5 wt. %, and at most 15 wt. %, of a comonomer as represented by ethylene, in view of excellent heat-resistance, sealability and film formability. A particularly preferred class of SSC-type polyolefins may include those obtained by using a constrained geometry catalyst (a type of metallocene catalyst developed by Dow Chemical Company). The constrained geometry catalyst may provide ethylene-α-olefin copolymers which may be classified as a substantially linear polyethylene resin having ca. 0.01 - ca. 3, preferably ca. 0.01 - ca. 1, more preferably ca. 0.05 - ca. 1, long-chain branching(s) per 1000 carbon atoms. Because of long-chain branches each having ca. 6 or more carbon atoms selectively introduced into its molecular structure, the ethylene-α-olefin copolymer may be provided with excellent physical properties and good formability or processability, and an example thereof is commercially available from Dow Chemical Company under a trade name of "AFFINITY" (including 1-octene as α-olefin).

Other examples of polyethylene resins obtained by using a metallocene catalyst may include those available under the trade names of "EXACT" (from Exxon Co.), "UMERIT" (frame Ube Kosan K.K.), "EVOLUE" (from Mitsui Kagaku K.K.), "KARNEL" (from Nippon Polychem K.K.) and "ELITE" (from Dow Chemical Co.)

Such a metallocene-catalyzed polyolefin (SSC-polyolefin) may preferably have a dispersion factor defined as a ratio (Mw/Mn) between a weight-average molecular weight (Mw) and a number-average molecular weight (Mn) of below 3, more preferably 1.9 - 2.2.

In order for the resultant polyamide-based multilayer film to exhibit good back-seaming performance, the polyolefin resins constituting the pair of outer layers are required to be of identical species. Herein, typical examples of polyolefin resins of identical species may include polyethylene for both outer layers, ethylene-α-olefin copolymer for both outer layers, and propylene-ethylene copolymer for both outer layers. It is however tolerable that a difference in content of up to 8 wt. % of a specific component (e.g., ethylene) for a combination of two copolymers (e.g., propylene-ethylene copolymers) or for a combination of homopolymer and a copolymer (e.g., polyethylene and ethylene-α-olefin copolymer). The polyolefin resins constituting the pair of outer layers may preferably exhibit a melting point difference therebetween of at most 30 °C, more preferably at most 10 °C.

The above-mentioned polyolefin resin can also constitute an intermediate resin layer other than the outer layers. Such a polyolefin resin constituting an intermediate resin layer can be of identical species or different species with the polyolefin resins constituting the outer layers. Further, it is also possible to use resins which may be broadly classified under polyolefin resins but are not included in preferred examples of the polyolefin resins for constituting the outer layers, such as ethylene-vinyl acetate copolymer, ethylene-methacrylic acid copolymer, ethylene-methacrylate ester copolymer, ethylene-acrylic acid copolymer, ethylene-acrylate ester copolymers (such as ethylene-ethyl acetate copolymer and ethylene-methyl acrylate copolymer), and ethylene copolymers, such as ionomer resins.

Examples of the polyamide resin ("Ny") constituting the gas-barrier intermediate layer may include: aliphatic polyamides, such as nylon 6, nylon 11, nylon 12, nylon 66, nylon 69, nylon 610 and nylon 612; and aliphatic copolyamides, such as nylon 6/66, nylon 6/10, nylon 6/12, nylon 6/69 and nylon 66/69. Nylon 6/66 and nylon 6/12 are particularly preferred in view of formability and processability. These aliphatic (co)polyamides may be used singly or in a blend of two or more species. It is also possible to use a blend of such an aliphatic (co)polyamide in a major proportion with a minor portion of an aromatic (co)polyamide (i.e., a (co)polyamide including a condensed unit formed from an aromatic diamine and/or an aromatic dicarboxylic acid). Examples such an aromatic (co)polyamide for blending with an aliphatic (co)polyamide may include: aromatic copolyamides including aromatic diamine units in addition to aliphatic polyamide units, such as nylon 66/610/MXD6 (wherein MXD 6 represents metaxylyleneadipamide); aromatic copolyamides including aromatic dicarboxylic acid units in addition to aliphatic polyamide units, such as nylon 66/69/6I (wherein 6I represents hexamethyleneisophthalamide); aromatic polyamides including aromatic dicarboxylic acid units, such as nylon 6I/6T (i.e., polyhexamethylene isophthalamide/terephthalamide which is a polycondensation copolymer of isophthalic acid, terephthalic acid and hexamethylenediamine); and aromatic polyamides including aromatic diamine units, such as nylon MXD6. These polyamide resins may preferably exhibit a principal melting point of 160-210 °C as a single species or a combination of two or more species.

The gas-barrier intermediate layer may be composed as a single layer of polyamide resin or in lamination of such a gas-barrier polyamide resin layer and another gas-barrier resin layer. In this case, as such another gas barrier resin, rather than a chlorine-containing resin (particularly PVDC (polyvinylidene chloride)) which is excellent in gas-barrier property but shows poor co-extrudability with a polyamide resin, it is preferred to use a chlorine-free gas-barrier resin, particularly preferred examples of which may include saponified ethylene-vinyl acetate copolymer (EVOH) which also exhibits good formability and processability. Examples of such laminate gas-barrier intermediate layer structure may include: Ny/EVOH, EVOH/Ny and Ny/EVOH/Ny. In the case of the lamination, the polyamide resin layer(s) may preferably occupy at least 50 %, particularly 50 - 95 % of the total thickness of the laminate gas-barrier intermediate layer. Between the Ny layer and the EVOH layer, it is possible to insert an adhesive resin layer or another resin layer, such as a polyolefin resin layer.

The Ny/EVOH (or EVOH/Ny) laminate structure is preferred as an intermediate layer because they have excellent co-extrudability and extremely good adhesion with each other so that an intermediate adhesive layer is not required therebetween. The Ny/EVOH/Ny laminate structure is preferred because Ny exhibits better adhesiveness to polyolefin resins (particularly acid-modified polyolefin possibly inserted between the outer layers of the polyolefin resins and the gas-barrier intermediate layer) than EVOH, the laminate structure better suppresses a curl of the resultant multilayer film possibly caused due to a difference in shrink behavior between Ny and EVOH, it provides a large strength, and the remarkable effects of the lamination are well retained in the stretched multilayer film casing further including both outer layers of identical polyolefin resin species.

One or more adhesive resin layers may be inserted as desired, e.g., in case where a sufficient adhesion strength is not attained between the above-mentioned respective layers. Preferred examples of such adhesive resin may include: ethylene-ethyl acrylate copolymer (EEA), ethylene-acrylic acid copolymer (EAA), ethylene methacrylic acid copolymer, ionomer resin (IO), acid-modified polyolefins, inclusive of reaction products of olefin homopolymers or copolymers with unsaturated carboxylic acids, such as maleic acid and fumaric acid, unsaturated carboxylic acid anhydrides, and unsaturated carboxylic acid esters or metal salts. Examples of the acid-modified polyolefins may include: acid-modified VLDPE, acid-modified LLDPE, and modified EEA, acid-modified EVA, acid-modified PP, and acid-modified PP-Et. It is particularly suitable to use an acid-modified polyolefin obtained by modification with an acid, such as maleic acid, and anhydrides thereof.

Into any one or more of the above-mentioned layers, it is possible to add an additive, such as a lubricant or an antistatic agent.

Examples of the lubricant may include: hydrocarbon lubricants, fatty acid lubricants, fatty acid amide lubricants, ester lubricants and metallic soaps. The lubricants may be liquid or solid. Specific examples of the hydrocarbon lubricants may include: liquid paraffin, natural paraffin, polyethylene wax and micro-crystalline wax. Fatty acid lubricants may include stearic acid and lauric acid. Fatty acid amide lubricants may include: stearic acid amide, palmitic acid amide, palmitic acid amide, N-oleyl-palmitic acid amide, erucic acid amide, arachidic acid amide, oleic acid amide, methylene-bis-stearoyl amide, and ethylene-bis-stearoyl amide. Ester lubricants may include butyl stearate, hardened castor oil, ethylene glycol monostearate, and stearic acid mono-glyceride. Metallic soaps may be derived from fatty acids having 12 - 30 carbon atoms and may include zinc stearate and calcium stearate as representative examples. Among these, fatty acid amide lubricants and calcium metallic soaps may be preferred because of good compatibility with a thermoplastic resin, particularly a polyolefin resin.

It is also possible to add an inorganic lubricant (anti-blocking agent), such as silica or zeolite, into both outer layers.

A lubricant, such as a fatty amide or silica, may for example be added in the form of a master batch. It is preferred to add a master batch containing, e.g., 20 wt. % of a lubricant in a proportion of 0.1 - 10 wt. % of the resin constituting an objective layer.

The antistatic agent may preferably be a surfactant, which may be any of anionic surfactants, cationic surfactants, nonionic surfactants, amphoteric surfactants and mixtures of these. The anti-static agent may preferably be added in a proportion of 0.05 - 2 wt. %, more preferably 0.1 - 1 wt. % of a resin layer to which it is added.

Preferred examples of layer structures of the polyamide-based multilayer film constituting the multilayer film casing according to the present invention are enumerated hereinbelow with component layers separated by "/" (slash) and listed from the outer surface layer to the inner surface layer. The following are merely examples and should not be construed as exhaustive. In the following, abbreviations "PO" and "Ad" are additionally used as meaning a polyolefin resin and an adhesive resin, respectively, in addition to already defined "Ny" (polyamide resin) and "EVOH" (saponified ethylene-vinyl acetate copolymer.
(1) PO/Ny/PO,
(2) PO/Ny/EVOH/PO,
(3) PO/Ny/EVOH/Ny/PO,
(4) PO/Ny/PO/Ny/PO,
(5) PO/Ad/Ny/Ad/PO,
(6) PO/Ad/Ny/EVOH/Ad/PO,
(7) PO/Ad/Ny/Ad/EVOH/Ad/PO,
(8) PO/Ad/Ny/EVOH/Ny/Ad/PO,
(9) PO/Ny/Ad/PO/Ad/Ny/PO,
(10) PO/Ny/Ad/EVOH/PO.

The film casing of the present invention may be composed of a single sheet of such polyamide-based multilayer film but can be composed of two or more sheets of such polyamide-based multilayer film in superposition. In the case of superposition of two or more sheets, both outer surface layers can contact each other, or the outer surface layer of one sheet can contact the inner surface layer of another sheet, as described. The application of the two sheets may be effected by self-adhesion of the surface layer resins or via a known adhesive disposed therebetween if the self-adhesion is insufficient. The superposition of two or more sheets is sometimes effective for alleviating local film thickness deviation.

The polyamide-based multilayer film may preferably be formed by laminating the above-mentioned layers, followed by stretching into a final form of multilayer film having a total thickness of 10 - 120 µm, more preferably 10 - 80 µm, further preferably 15 - 60 µm, for use in providing a stretched multilayer film casing of the present invention.

More specifically, in the polyamide-based multilayer film, it is preferred that the outer surface layer of a polyolefin resin has a thickness of 3 - 50 µm, particularly 5 - 30 µm; the gas-barrier intermediate layer has a total thickness of 4 - 30 µm, particularly 6 - 30 µm including individual layer(s) of a polyamide resin (and optionally used another gas-barrier resin) each having a thickness of 2 - 35 µm, particularly 3 - 25 µm; and the inner surface layer of a polyolefin resin has a thickness of 3 - 50 µm, particularly 5 - 30 µm. It is particularly preferred that both surface layers have a total thickness of at least 10 µm. By satisfying the above-mentioned thickness requirements, a packaged product of a casing formed by back-seaming of the stretched multilayer film showing a hot-water shrinkability of 5 - 20 % (at 90 °C) and a heat-shrinkage stress of at most 2 MPa (at 50 °C) is provided with a sufficient resistance to a heat-treatment, such as hot sterilization and retort treatment.

The adhesive resin layers can be provided in a plurality of layers, each having a thickness in the range of 0.5 - 5 µm.

The polyamide-based multilayer film constituting the film casing of the present invention can be produced through a known inflation process or tenter process, but may preferably be formed through the process of the present invention including an inflation step. A preferred embodiment thereof is described with reference to the sole figure in the drawing.

A number of extruders 1 (only one being shown) are provided corresponding to the number of laminated resin species, and the respective resins from the extruders are co-extruded through an annular die 2 to form a tubular product (parison) 3 including at least three layers of an outer surface layer comprising a polyolefin resin, an intermediate layer comprising a polyamide resin and an inner surface layer comprising a polyolefin resin. The parison 3 is then vertically pulled down into a water bath 4 and taken up by pinch rollers 5 while being cooled down to a temperature that is below the lowest one of the melting points of the principal resins constituting the respective resin layers (i.e., the polyolefin resin, the polyamide resin and the polyolefin resin), preferably to 40 °C or below. The thus-taken-up tubular film 3a, while optionally introducing an opening aid, such as soybean oil or a glycerin fatty acid ester, thereinto as desired, is introduced into a bath 6 of hot water at, e.g., 80 - 95 °C, which is at most the lowest one of the melting points of the principal resins constituting the respective layers, and the thus-heated tubular film 3b is pulled upwards to form a bubble of tubular film 3c with fluid air introduced between pairs of pinch rollers 7 and 8, whereby the tubular film 3c is biaxially stretched simultaneously at a ratio of preferably 2 - 4 times, more preferably 2.5 - 4 times, in each of vertical or machine direction (MD) and transverse or lateral direction (TD) while cooling the film 3c with cool air at 10 - 20 °C from a cooling air ring 9. If the stretching ratio exceeds the upper limit, the resultant film is liable to be provided with an excessively large heat-shrinkage stress, or the internal pressure within the inflation bubble is liable to be excessively high, thus posing a difficulty in continual production. Below the lower limit, stretching irregularities are liable to occur, so that the resultant film is provided with a large thickness fluctuation, thus failing to exhibit automatic (filling and) packaging performances. The stretching ratio in MD and TD directions may be identical or different within the above-mentioned range.

The thus biaxially stretched film 3d is once folded or laid flat and then pulled downwards to again form a bubble of tubular film 3e with fluid air introduced between pairs of pinch rollers 10 and 11. The bubble of tubular film 3e is held within a heat-treating tube 12 wherein steam from blowing ports 13 is blown (or hot water from spraying ports is sprayed) against the tubular film 3e to heat-treat the tubular film 3e after the biaxial stretching at 60-98 °C, preferably 60 - 95 °C, for ca. 1 - 20 sec., preferably ca. 1.5 - 10 sec., thereby allowing the tubular film to relax by 0 - 25 %, preferably 5 - 20 %, in each of the vertical direction (MD) and the transverse direction (TD). A tubular film 3e after the heat-treatment corresponds to a polyamide-based multilayer film constituting a stretched multilayer film casing according to the present invention and is wound about a take-up roller 14.

The thus-obtained heat-shrinkable multilayer film according to the present invention is provided with a reduced heat-shrinkage stress at 50 °C of at most 2.0 MPa, preferably at most 1.5 MPa, further preferably at most 1.0 MPa, in each of the machine direction(MD) and the transverse direction (TD), while retaining an adequate level of hot-water shrinkability at 90 °C of 5 - 20 %, preferably 10 - 20 %, in at least one direction, preferably in each of the MD and TD directions, thus being provided with good automatic packaging performances.

A film having a hot water shrinkability at 90 °C of 5 - 20 %, preferably 10 - 20 %, exhibits good mechanical properties suitable for an automatic filling and packaging process for sausage, cheese, etc., including a back-seaming step, and provides packaged products having a beautiful appearance through the process. A film showing an excessively large hot-water shrinkability is liable to exhibit poor matching with packaging machines. On the other hand, if the film has too small a hot-water shrinkability, the resultant packaged product is accompanied with surface wrinkles due to insufficient film shrinkage, so that the merchandise value is liable to be lowered.

As the polyamide-based multilayer film exhibits a hot-water shrinkability of at most 2MPa, further at most 1.5 MPa, particularly at most 1.0 MPa, the film can exhibit excellent matching with packaging machines and heat-sealability with suppressed size change (particularly width change) after the processing, thereby allowing production of packaged products having extremely good appearance. In case of too large a hot-water shrinkability, the film is liable to cause sealing failure in the packaging machine or result in a packaged product filled with the content material causing breakage or bending (thus failing to provide a straight product but result in a warped packaged product).

In order to realize such a low heat-shrinkage stress and excellent matching with packaging machines while retaining a moderate hot-water shrinkability, it is particularly preferred to secure a relatively high stretching ratio of 2.0 - 4 times, particularly 2.5-4 times, in each of the MD/TD directions, and then effect a low-temperature heat treatment at 60 - 98 °C, particularly 65 - 95 °C, with steam or warm water having a large heat capacity. At a lower stretching ratio, it becomes difficult to ensure a necessary level of heat-shrinkability after the heat-treatment, and the product film is caused to have a large local thickness fluctuation, thus being liable to exhibit inadequate matching with an automatic packaging machine or inferior back-seaming performance. On the other hand, in case where a medium having a small heat capacity such as heated air is used or a lower temperature of heated air is used or a lower temperature of below 60 °C is adopted in the heat-treatment after the biaxial stretching, it becomes difficult to attain an objective effect of sufficiently reducing the heat-shrinkage stress, thus resulting in a film exhibiting inferior matching with automatic packaging machines or back-seaming performance and resulting in packaged products having lower merchandise values due to size changes of the film.

In the above-described process for producing the polyamide-based multilayer film according to the present invention, the multilayer film before or after the stretching may be exposed to actinic radiation. By the exposure to actinic radiation, the product multilayer film may be provided with improved heat resistance and mechanical strength. Because of a moderate crosslinking effect thereof, the exposure to actinic radiation can exhibit an effect of providing improved film formability by stretching and improved heat resistance. In the present invention, known actinic radiation, such as α rays, β rays, electron rays, γ rays, or X rays may be used. In order to provide an adequate level of crosslinking effect, electron rays and γ rays are preferred, and electron rays are particularly preferred in view of facility of handling and high processing capacity in producing the objective multilayer film.

The conditions for the above exposure to actinic radiation may be appropriately set depending on the purpose thereof, such as a required level of crosslinkage. For example, it is preferred to effect the electron ray exposure at an acceleration voltage in the range of 150 - 500 kilo-volts to provide an absorbed dose of 10 - 200 kGy (kilo-gray) or effect γ-ray exposure at a dose rate of 0.05 - 3 kGy/hour to provide an absorbed dose of 10 - 200 kGy.

It is also possible to exposure the inner surface, the outer surface or both surfaces of the above-prepared polyamide-based multilayer film to corona discharge, plasma treatment or flame treatment, for surface modification, such as improved most adhesion.

The thus-prepared polyamide-based multilayer film is ordinarily cut into a flat film having a width corresponding to the size of an objective casing. The flat film is then subjected to a back-seaming step wherein both edges of the flat film are superposed with each other so that both outer surfaces contact each other in a width of 3 - 40 mm, preferably 5 - 25 mm and are sealed to each other in a portion of the superposed width, to provide a tubular film casing, or to an automatic packaging process including a film casing-forming step by back-seaming. If the superposed width is too large, the packaged product can be warped in some cases due to a heat-shrinkage stress occurring at the superposed film portion. If the superposed width is too narrow, the operability in the back-seaming step is liable to be worse.

An example of automatic filling and packaging machine for pasty or semi-fluid matter, such as sausage and cheese, is available under a trade name of "KAP" (available from Kureha Kagaku Kogyo K.K.), wherein a flat film is formed into a shape of roughly a tube, the outer surface and the inner surface of the film are sealed to each other (i.e., back-seamed) to form a casing, the casing is then filled with a pasty content material to form a projectile shell-shaped package, and longitudinal ends of the package are closed by clipping or sealing to provide a packaged product. Usually, the packaged product is then immersed in hot water to cause the film tightly fit onto the content material by a shrinkage of the film. Flat films having widths in a range of 40 - 450 mm are usually used in "KAP". Other commercially available automatic filling and packaging machines include "TSA" (available from Polyclip Co.) and an automatic tube packaging machine (available from Cartridge Pack Co.).

In a back-seaming (or center-seaming) step in general (i.e., other than the one specifically described as a step included in an automatic packaging process), a flat film is brought into a form of roughly a tube, and the outer surface and the inner surface of the roughly tubular form are sealed to each other by various sealing schemes, to form a tubular casing. The thus-formed tubular casing may be processed in various manners, e.g., wound in a long tubular form once into a roll or immediately cut into a length suitable for final packaging purpose, or subjected to shirring, i.e., folding or pleating the tubular film into a smaller length so as to facilitate the filling with the content material. The thus-treated back-seamed casing (or bag) may be used for packaging of the content material by clipping or sealing at both longitudinal ends. In an ordinary way, a tubular casing is first clipped or sealed at one end, then filled with a content material and then clipped or sealed at the other end to complete the filling with the content material, i.e., provide a packaged product. The thus-formed packed product filled with the content material is then ordinarily immersed in hot water for a certain period (i.e., 1 sec to 7 hours) for various purposes including sterilization and/or cooking of the content material, and shrinkage of the casing film. The hot water immersion may be performed by directly immersing packaged products one by one or simultaneously into hot water, or by holding some packaged products into a retainer, such as a cage, and then immersing the retainer into hot water. A back-seamed casing or bag is advantageous in that it is accompanied with less width fluctuation than a seamless casing or seamless bag. A small-diameter seamless casing is particularly liable to have a relatively large width fluctuation because the stretching thereof is liable to be unstable. The flat-form polyamide-based multilayer film to be subjected to the back-seaming may generally have a width of 40 - 450 mm.

The back-seamed casing may preferably have a lay-flat width of 15 - 160 mm. Below 15 mm, the casing may allow a manual or hand processing, but the automatic packaging operation therewith becomes difficult because of film slippage and the superposed width portion thereof has a relatively large areal proportion, thus being liable to result in a warped packaged product. On the other hand, in excess of 160 mm, the packaged product after heat treatment, such as boiling or retorting, is liable to be accompanied with wrinkles. If a film having a larger heat-shrinkage stress is used in order to suppress the occurrence of wrinkles, the back-seaming becomes difficult, and the sealed part is liable to be broken during the heat treatment, such as boiling or retorting.

The back-seaming can be generally performed over a sealing width of 0.1 - 10 mm, but in the present invention, an extremely reduced sealing width (or seam width) of 0.1 - 1.5 mm is preferred so as to provide the packaged product with an easy openability and a beautiful appearance. One very advantageous feature of the film casing according to the present invention is that a seal (or seam) portion provided to the packaged product even at such a narrow sealing width endures a post-heat treatment without causing a puncture thereof. The sealing for the back-seaming in an automatic packaging machine may for example be performed by indirect high-frequency sealing, ultrasonic sealing, hot jetting with hot air set at ca. 300 - 350 °C, and heat sealing using, e.g., a hot sealing bar.

The multilayer film casing according to the present invention obtained through back-seaming may be subjected, as desired, to a pre-filling post treatment, such as shirring, for facilitating the filling with a content material.

### [Examples]

Hereinbelow, the present invention will be described more specifically based on Examples and Comparative Examples. It should be noted however that the scope of the present invention is not restricted by such Examples. Some physical properties described herein are based on values measured according to the following methods.

### <Physical property measurement methods>

### 1. Hot-water shrinkability

A sample film on which marks are indicated at a distance therebetween of 10 cm in each of a machine direction (MD) and a transverse direction (TD) perpendicular to the machine direction, is dipped for 10 sec. in hot water adjusted at 90 °C and then taken out therefrom, followed by immediate quenching within water at room temperature. Thereafter, the distance between the marks is measured and a decrease in distance is indicated in percentage of the original distance 10 cm. Five sample films from each product film are subjected to the above measurement, and the average value of percentage decrease is indicated in each of the MD and TD directions.

### 2. Heat-shrinkage stress

A sample film strip of 150 mm in length and 15 mm in width taken in its MD and TD directions, respectively, is cut out from a product multilayer film, and set with a gripper span of 100 mm on a universal tester ("Model 5565", available from Instron Co.) disposed in a thermostat vessel ("3119 Series", available from Instron Co.) held at 23 °C, followed by a temperature increase at a rate of 2 °C/min. in the thermostat vessel. In the following Examples and Comparative Examples, thermal-shrinkage stress values varying on temperature increase were measured at 50 °C in the course of the temperature increase and indicated.

### 3. Crystal melting point

A differential scanning calorimeter ("DSC-7", mfd. by Perkin-Elmer Corp.) is used for measurement of crystal melting points. For measurement, a sample resin is heated at a rate of 20 °C/min. from 30 °C to 240 °C and held at 240 °C for 1 min., followed by cooling at 20 °C/min. to 30 °C and holding at 30 °C for 1 min. Then, the sample resin is heated at a rate of 20 °C/min. up to 240 °C, and a peaktop temperature appearing on a crystal melting curve obtained during the heating is taken as a crystal point (°C).

### <Film Production Examples>

Next, Examples and Comparative Examples for production of heat-shrinkable multilayer films are described. Resins used in the following productions examples are inclusively shown in Table 1 together with their abbreviations.

### Example 1

By using an apparatus having an arrangement as roughly shown in the sole figure in the drawing, a tubular laminate product (parison) having a laminar structure from the outer to the inner layers of VL-1(10)/M-PE(1.5)/Ny-1(12)/EVOH(4)/M-PE(1.5)/VL-1(20) with thickness ratios of respective layers indicated in the parentheses was co-extruded by extruding the respective resins through a plurality of extruders 1 (only one being shown) respectively and introducing the melted resins to an annular die 2 to melt-bond the respective layers in the above-described order. The molten parison 3 extruded out of the die 2 was quenched to 10 - 18 °C by a water bath 4 to form a flat tubular product 3a having a lay-flat width of 148 mm. Then, the flat tubular product 3a was passed through a hot water bath 6 at 87 °C and formed into a bubble-shaped tubular film 3c, which was then biaxially stretched at ratios of 2.7 times in MD direction and 2.7 times in TD direction by the inflation process while being cooled with cooing air at 15 - 20 °C from an air ring 9. Then, the biaxially stretched film 3d was guided into a 2 meter-long heat-treating tube 12 to form a bubble-shaped tubular film 3e, which was then heat-treated for 2 sec. with steam at 70 °C blown out of steam blowing ports 13, while being allowed to relax by 5 % in MD direction and by 5 % in TD direction, thereby providing a biaxially stretched film (polyamide-based multilayer film) 3f. The thus-obtained biaxially stretched film exhibited a lay-flat width of 380 mm and a thickness of 49 µm.

The laminate structure and film production (biaxial stretching) conditions, etc. of the thus-obtained biaxially stretched film are inclusively shown in Table 2 together with those of biaxially stretched films obtained in other Examples and Comparative Examples.

### Examples 2 - 9 and Comparative Examples 1 - 3

Various biaxially stretched films were prepared in similar manners as in Example 1 except that the laminar structures and film production (biaxial stretching) conditions were respectively changed as shown in Table 2 and the relaxation and heat-treating conditions were respectively changed as shown in Table 2.

### Comparative Example 4

A laminate film having a layer structure of CPP//Ny//CPP (// represents a 2 µm-thick layer of a known polyester adhesive) was prepared by two sheets of 20 µm-thick yet-unstretched polypropylene film ("CPP GHC", mfd. by Tocello K.K.) with an intermediate 15 µm-thick nylon 6 (Ny 6) film ("BONEAL SC", mfd. by Mitsubishi Kagaku Kohjin Packs K.K.)

Each of the multilayer films obtained in the above Examples and Comparative Examples was subjected to the above-mentioned measurement of physical properties and performance evaluation tests described hereinafter. The results are inclusively shown in Table 3 described hereinafter.

### <Performance evaluation tests>

### 1. Sausage automatic filling and packaging test

A sample (tubular) film, after being slit into a rectangular film having a width of 85 mm, was fed at a speed of 10 m/min. and subjected to automatic filling and packaging of sausage meat by using an automatic filling and packaging machine "KAP-500", mfd. by Kureha Kagaku Kogyo K.K.) including a sealing means according to hot jetting of hot air at 250 °C at a jetting pressure of 0.8 kg/cm² onto the film for back-seaming to provide a sealing width of ca. 1.3 mm to form a casing, which was then immediately filled with the sausage meat.

The film casing after the sealing exhibited a lay-flat width (i.e., a width of a laid-flat tubular film) was 37 mm, and was filled with the sausage meat between clipped two ends thereof 200 mm-distant from each other, to provide a packaged product which weighed ca. 65 g.

The packaged product was subjected to a boiling test in hot water at 80 °C for 60 min. and immediately thereafter cooled in cold water at 5 - 10 °C for 30 min. The packaged product thus sufficiently cooled was immersed in hot water at 90 °C for 5 sec. and then cooled. The sealing performance and the appearance of the thus-treated packaged products after the heating and cooling cycle were evaluated according to the following standard.
A: No problem was observed regarding the sealing performance, and continuous automatic filling and packaging was possible. Further, the packaged products after the heating and cooling cycle exhibited good appearance free from wrinkles.
B: No problem was observed regarding the sealing performance, and continuous automatic filling and packaging was possible. However, the packaged products after the heating and cooling cycle exhibited wrinkles, thus substantially losing the merchandise value.
C: The film contacted, e.g., the forming part of the packaging machine, due to film shrinkage caused during the hot jet sealing, whereby continuation of the automatic filling and packaging became impossible.

### 2. Back-seaming test

A sample (tubular) film, after slitting into a width of 145 mm, was subjected to a test for evaluating matching with a back-seaming machine ("S-750", mfd. by Kureha Kagaku Kogyo K.K.) equipped with a high-frequency sealing means under the conditions of: a sealing speed of 48 shots/min., a film feed speed of 14 m/min. and a sealer current of 230 mA to provide a sealing width of ca. 1.0 mm.

The objective lay-flat width of the film-casing after the back-seaming was 65 mm.

The casing obtained by the back-seaming was filled with pork sausage meat with a room margin of ca. 5 % (i.e., a content material of 95 %-volume relative to 100 %-volume of the casing), and then both ends thereof were clipped to provide a packaged product, which was then immersed in hot water at 80 °C for 60 min. The back-seaming performance and the appearance of the packaged product after the heat-treatment were evaluated according to the following standard.
A: Continuous back-seaming was possible, and the casings after the back seaming exhibited a width fluctuation of at most 2 mm. The package product after the heating exhibited beautiful appearance free from wrinkles.
B: Continuous back-seaming was possible, but the casings after the back seaming exhibited a width fluctuation exceeding 2 mm. The packaged product after heating exhibited wrinkles, thus substantially losing the merchandise value.
C: Continuous back-seaming was impossible.

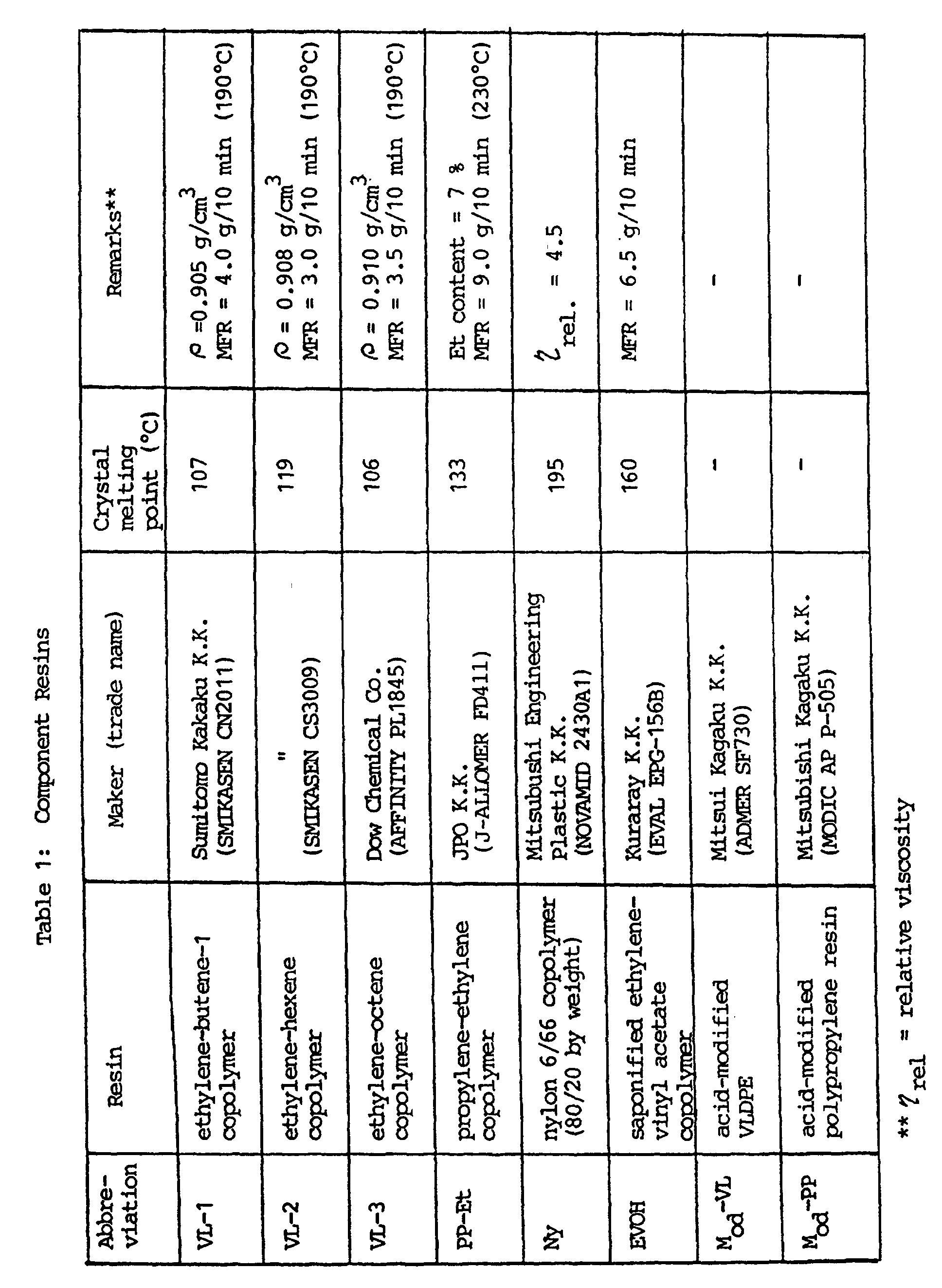

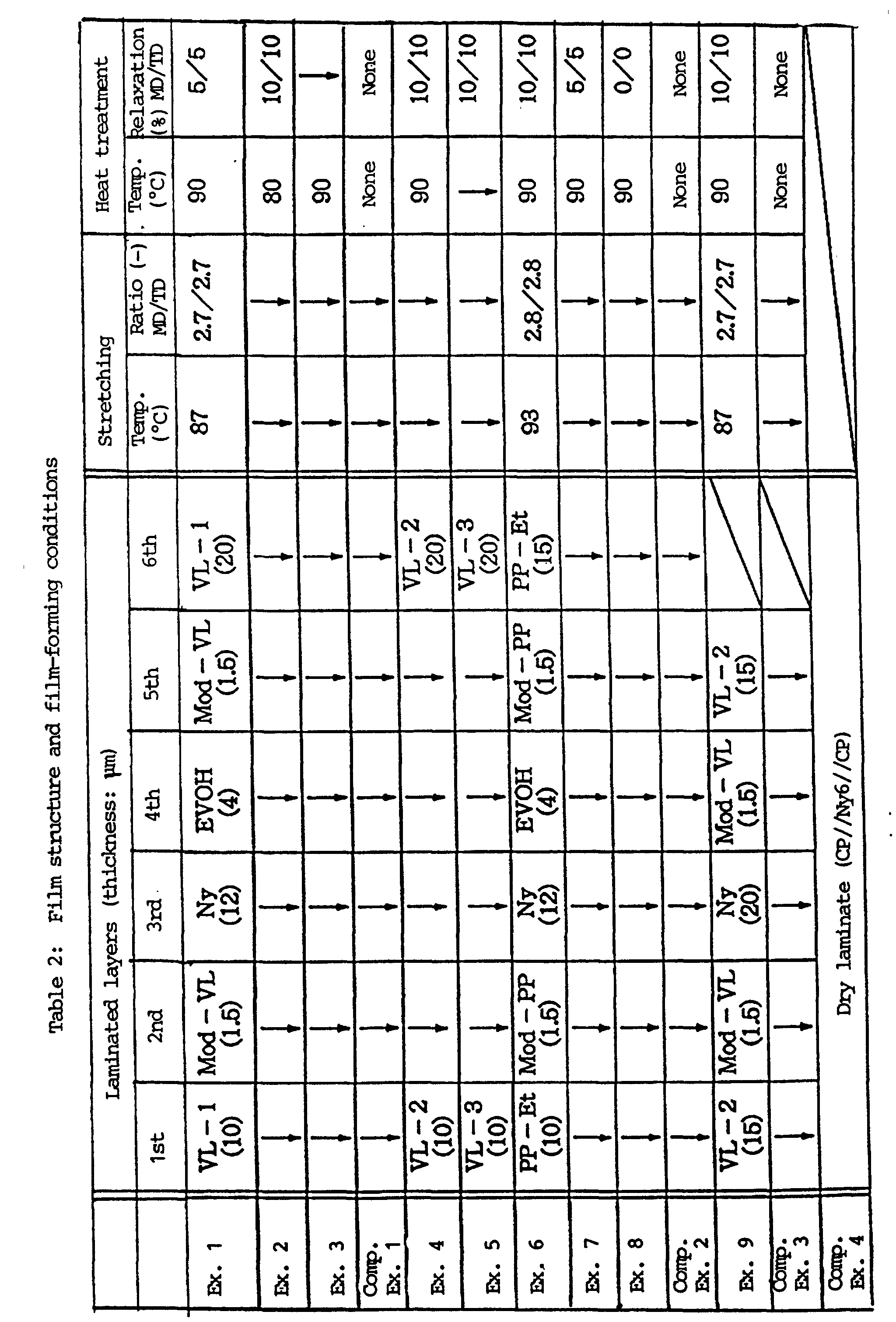

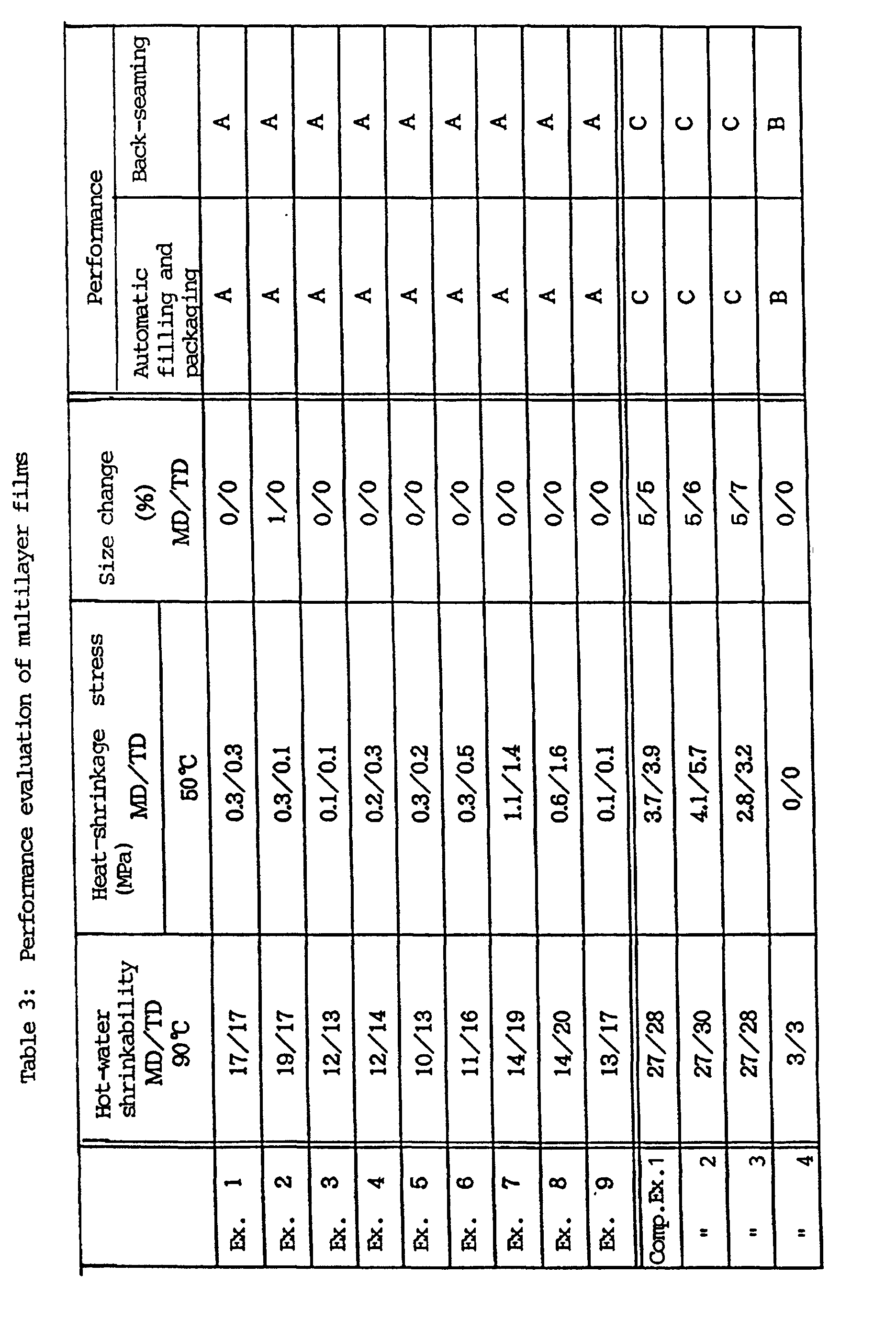

As described above, according to the present invention, there is provided a film casing suitable for automatic filling and packaging of (semi-)fluid content material, such as sausage meat, obtained by back-seaming of a polyamide-based multilayer film which is free from an excessively large heat-shrinkage stress while ensuring a necessary level of heat-shrinkability.

## Claims

1. A stretched multilayer film casing, comprising: a stretched multilayer film comprising a pair of outer layers comprising polyolefin resins of identical species, and a gas-barrier intermediate layer comprising a polyamide resin; said stretched multilayer film exhibiting a heat-shrinkage stress at 50 °C of at most 2MPa both in longitudinal direction and in transverse direction and a hot water shrinkability at 90 °C of 5 - 20 %; said stretched multilayer film having a pair of opposite side regions joined together by back-seaming with both surfaces to form a tubular casing.

2. A film casing according to Claim 1, wherein said stretched multilayer film exhibits a heat-shrinkage stress at 50 °C of at most 1.5 MPa both in longitudinal direction and transverse direction.

3. A film casing according to Claim 1 or 2, having a lay-flat width after the back-seaming of 15-160 mm.

4. A film casing according to any preceding claim, wherein said pair of outer layers of the stretched multilayer film have a total thickness of at least 10 µm.

5. A film casing according to any preceding claim, wherein said pair of opposite side regions of the stretched multilayer film are joined by back-seaming at a sealing width of 0.1 - 1.5 mm.

6. A film casing according to any preceding claim, wherein said stretched multilayer film includes a laminar gas-barrier layer structure including a layer of saponified ethylene-vinyl acetate copolymer adjacent to the intermediate layer comprising a polyamide resin.

7. A film casing according to Claim 6, wherein said stretched multilayer film includes an at least three-layered gas-barrier layer structure including the layer of saponified ethylene-vinyl acetate copolymer sandwiched between a pair of the intermediate layers each comprising a polyamide resin.

8. A process for producing a stretched multilayer film casing, comprising the steps of:
co-extruding at least three species of melted thermoplastic resins to form a tubular product comprising at least three layers including a pair of outer layers each comprising a polyolefin resin, and a gas-barrier intermediate layer comprising a polyamide resin,
cooling with water the tubular product to a temperature below a lowest one of the melting points of the polyolefin resins and the polyamide resin,
re-heating the tubular product to a temperature which is at most the lowest one of the melting points of the polyolefin resins and the polyamide resin,
vertically pulling the tubular product while introducing a fluid into the tubular product to stretch the tubular product at a rate of 2.0 - 4 times both in a vertical direction and in a circumferential direction, thereby providing a biaxially stretched tubular film,
folding the tubular film,
again introducing a fluid into the folded tubular film to form a tubular film,
heat-treating the tubular film from its outer surface layer with steam or hot water at 60 - 98 °C,
cooling the heat-treated tubular film to provide a biaxially stretched film exhibiting a heat-shrinkage stress at 50 °C of at most 2MPa both in longitudinal direction and in transverse direction and a hot water shrinkability at 90 °C of 5 - 20 %,
slitting the biaxially stretched tubular film into a rectangular film, and
joining pair of opposite side regions of the rectangular film by back-seaming with both surface of the rectangular film to form a tubular film casing.

9. A packaged product, comprising a film casing according to any one of Claims 1 - 7, and a content material filling and packaged within the film casing.

10. A packaged product according to Claim 9, wherein the content material comprises a (semi-)fluid food material.

11. A packaged product according to Claim 10, wherein the (semi-)fluid food material is a fish-meat or livestock-meat sausage material.

## Patentansprüche

1. Eine gestreckte Mehrschichtfolienhülle, die eine gestreckte Mehrschichtfolie umfasst, welche ein Paar von äußeren Schichten, die Polyolefinharze der gleichen Art umfassen, und eine ein Polyamidharz umfassende Gasbarriere-Zwischenschicht umfasst, wobei die gestreckte Mehrschichtfolie eine Wärmeschrumpfspannung bei 50°C von höchstens 2 MPa sowohl in der Längsrichtung als auch in der Querrichtung und ein Heißwasserschrumpfvermögen bei 90°C von 5 bis 20 % aufweist, wobei die gestreckte Mehrschichtfolie ein Paar gegenüberliegender Seitenbereiche aufweist, die mit beiden Oberflächen durch Rücknahtverbinden zur Bildung einer schlauchförmigen Hülle miteinander verbunden sind.

2. Folienhülle nach Anspruch 1, wobei die gestreckte Mehrschichtfolie eine Wärmeschrumpfspannung bei 50°C von höchstens 1,5 MPa sowohl in der Längsrichtung als auch in der Querrichtung aufweist.

3. Folienhülle nach Anspruch 1 oder 2, die nach dem Rücknahtverbinden eine flachliegende Breite von 15 bis 160 mm aufweist.

4. Folienhülle nach einem der vorstehenden Ansprüche, bei der das Paar von äußeren Schichten der gestreckten Mehrschichtfolie eine Gesamtdicke von mindestens 10 µm aufweist.

5. Folienhülle nach einem der vorstehenden Ansprüche, bei der das Paar von gegenüberliegenden Seitenbereichen der gestreckten Mehrschichtfolie durch Rücknahtverbinden mit einer Siegelungsbreite von 0,1 bis 1,5 mm verbunden ist.

6. Folienhülle nach einem der vorstehenden Ansprüche, bei der die gestreckte Mehrschichtfolie eine laminare Gasbarriereschichtstruktur umfasst, die eine Schicht aus einem verseiften Ethylen-Vinylacetat-Copolymer angrenzend an die Zwischenschicht umfasst, die ein Polyamidharz umfasst.

7. folienhülle nach Anspruch 6, bei der die gestreckte Mehrschichtfolie eine mindestens dreischichtige Gasbarriereschichtstruktur umfasst, welche die Schicht aus einem verseiften Ethylen-Vinylacetat-Copolymer umfasst, die zwischen einem Paar der Zwischenschichten, die jeweils ein Polyamidharz umfassen, sandwichartig angeordnet ist.

8. Ein Verfahren zur Herstellung einer gestreckten Mehrschichtfolienhülle, das die Schritte umfasst:
Coextrudieren von mindestens drei Arten geschmolzener thermoplastischer Harze zur Bildung eines schlauchförmigen Produkts, das mindestens drei Schichten umfasst, einschließlich eines Paars äußerer Schichten, die jeweils ein Polyolefinharz umfassen, und einer Gasbarriere-Zwischenschicht, die ein Polyamidharz umfasst,
Kühlen des schlauchförmigen Produkts mit Wasser auf eine Temperatur unter den niedrigsten der Schmelzpunkte der Polyolefinharze und des Polyamidharzes,
erneutes Erhitzen des schlauchförmigen Produkts auf eine Temperatur, die höchstens dem niedrigsten der Schmelzpunkte der Polyolefinharze und des Polyamidharzes entspricht,
vertikales Ziehen des schlauchförmigen Produkts, während ein Fluid in das schlauchförmige Produkt eingebracht wird, so dass das schlauchförmige Produkt mit einer Rate des 2,0- bis 4-fachen sowohl in der vertikalen Richtung als auch in der Umfangsrichtung gestreckt wird, wodurch eine biaxial gestreckte schlauchförmige Folie bereitgestellt wird,
Falten der schlauchförmigen Folie,
emeutes Einbringen eines Fluids in die gefaltete schlauchförmige Folie zur Bildung einer schlauchförmigen Folie,
Wärmebehandeln der schlauchförmigen Folie mit Dampf oder heißem Wasser bei 60 bis 98°C von deren äußerer Oberflächenschicht her,
Abkühlen der wärmebehandelten schlauchförmigen Folie, so dass eine biaxial gestreckte Folie bereitgestellt wird, die eine Wärmeschrumpfspannung bei 50°C von höchstens 2 MPa sowohl in der Längsrichtung als auch in der Querrichtung und ein Heißwasserschrumpfvermögen bei 90°C von 5 bis 20 % aufweist,
Schlitzen der biaxial gestreckten schlauchförmigen Folie zu einer rechteckigen Folie und
Verbinden eines Paars gegenüberliegender Seitenbereiche der rechteckigen Folie durch Rücknahtverbinden mit beiden Oberflächen der rechteckigen Folie zur Bildung einer schlauchförmigen Folienhülle.

9. Ein verpacktes Produkt, das eine Folienhülle nach einem der Ansprüche 1 bis 7 und ein Material umfasst, das in die Folienhülle eingefüllt und darin verpackt ist.

10. Verpacktes Produkt nach Anspruch 9, bei dem das Material ein (halb-) fluides Nahrungsmittelmaterial umfasst.

11. Verpacktes Produkt nach Anspruch 10, bei dem das (halb-) fluide Nahrungsmittelmaterial ein Fischfleischmaterial oder ein Nutztierfleisch-Wurstmaterial umfasst.

## Revendications

1. Pellicule de film étiré à plusieurs couches, comprenant : un film étiré à plusieurs couches comprenant une paire de couches externes comprenant des résines polyoléfines d'espèces identiques, et une couche intermédiaire barrière contre les gaz comprenant une résine polyamide ; ledit film étiré à plusieurs couches présentant un effort thermorétractable à 50 °C d'au plus 2 Mpa dans le sens longitudinal et dans le sens transversal et une rétrécissabilité dans de l'eau chaude à 90 °C de 5 à 20 % ; ledit film étiré à plusieurs couches ayant une paire de zones latérales opposées liées ensemble par jointure arrière des deux surfaces pour former une pellicule tubulaire.

2. Pellicule de film selon la revendication 1, dans laquelle ledit film étiré à plusieurs couches présente un effort thermorétractable à 50 °C d'au plus 1,5 Mpa dans le sens longitudinal et dans le sens transversal.

3. Pellicule de film selon la revendication 1 ou 2, ayant une largeur de feuille aplatie après la jointure arrière de 15 à 160 mm.

4. Pellicule de film selon l'une quelconque des revendications précédentes, dans laquelle ladite paire de couches externes du film étiré à plusieurs couches a une épaisseur totale d'au moins 10 µm.

5. Pellicule de film selon l'une quelconque des revendications précédentes, dans laquelle ladite paire de zones latérales opposées du film étiré à plusieurs couches est liée par jointure arrière à une largeur de jointure de 0,1 à 1,5 mm.

6. Pellicule de film selon l'une quelconque des revendications précédentes, dans laquelle ledit film étiré à plusieurs couches comprend une structure laminaire de couche barrière contre les gaz comprenant une couche de copolymère d'acétate de vinyle-éthylène saponifié adjacente à la couche intermédiaire comprenant une résine polyamide.

7. Pellicule de film selon la revendication 6, dans laquelle ledit film étiré à plusieurs couches comprend une structure d'au moins trois couches barrières contre les gaz comprenant la couche de copolymère d'acétate de vinyle-éthylène saponifié intercalée entre une paire de couches intermédiaires comprenant chacune une résine polyamide.

8. Procédé de production d'une pellicule de film étiré à plusieurs couches, comprenant les étapes consistant à :
co-extruder au moins trois espèces de résines thermoplastiques fondues pour former un produit tubulaire comprenant au moins trois couches comprenant une paire de couches externes comprenant chacune une résine polyoléfine, et une couche intermédiaire barrière contre les gaz comprenant une résine polyamide,
refroidir avec de l'eau le produit tubulaire à une température au-dessous de la température la plus basse des points de fusion des résines polyoléfines et de la résine polyamide,
chauffer de nouveau le produit tubulaire à une température qui est au plus la température la plus basse des points de fusion des résines polyoléfines et de la résine polyamide,
tirer verticalement le produit tubulaire tout en introduisant un fluide dans le produit tubulaire pour étirer le produit tubulaire à un taux de 2,0 à 4 fois dans le sens vertical et dans le sens de la circonférence, donnant ainsi un film tubulaire étiré de manière biaxiale,
plier le film tubulaire
introduire de nouveau un fluide dans le film tubulaire plié pour former un film tubulaire.
traiter thermiquement le film tubulaire de sa couche de surface externe avec de la vapeur ou de l'eau chaude à 60-98 °C,
refroidir le film tubulaire traité thermiquement pour fournir un film étiré de manière biaxiale présentant un effort thermorétractable à 50 °C d'au plus 2 Mpa dans le sens longitudinal et dans le sens transversal et une rétrécissabilité dans de l'eau chaude à 90 °C de 5 à 20 %,
couper le film tubulaire étiré de manière biaxiale en un film carré, et
joindre la paire de zones latérales opposées du film rectangulaire par jointure arrière des deux surfaces du film rectangulaire pour former une pellicule de film tubulaire.

9. Produit emballé, comprenant une pellicule de film selon l'une quelconque des revendications 1 à 7, et, un matériau de remplissage contenu et emballé dans la pellicule de film.

10. Produit emballé selon la revendication 9, dans lequel le matériau contenu comprend un produit alimentaire (semi)-liquide.

11. Produit emballé selon la revendication 10, dans lequel le produit alimentaire (semi)-liquide est une saucisse de viande de poisson ou de viande de bétail.
